# EUROPEAN PATENT SPECIFICATION

(11) **EP 1 026 107 B1**
(45) Date of publication and mention of the grant of the patent: **04.06.2003**
(21) Application number: 00200389.5
(22) Date of filing: 04.02.2000
(51) Int. Cl.: B65G 53/52, F16L 55/24

(54) **Joint for pipelines for pneumatic transportation of loose materials**
Eine Kupplung für Rohrleitungen zur pneumatischen Förderung von Schüttgut
Raccord pour canalisations de transport pneumatique de matériaux en vrac

(30) Priority: 05.02.1999 IT MO990005 U
(43) Date of publication of application: 09.08.2000
(73) Proprietor: WAM S.p.A., 41030 Ponte Motta Cavezzo (Modena) (IT)
(72) Inventor: Marco GADDI, I-41030 San Prospero(MO) (IT)
(74) Representative: Gotra, Stefano

(56) References cited:
- DE-B- 1 143 754
- GB-A- 729 880
- GB-A- 731 646
- GB-A- 1 110 273
- US-A- 3 759 580

## Description

Specifically, though not exclusively, the invention can be used in the field of transportation plants for loading silos and/or hoppers, where grain or powdery materials are to be shifted.

Special reference is made to a joint for connecting up two concurrent-axis pipes at an angle of about 90° to each other. The joint is of the type comprising a hollow body internally defining a curved conduit with about a 90° bend, and having a mouth at either end, one for inlet and the other for outlet of the material; the mouths also being arranged at about 90° to each other.

A joint of this type already exists, and offers the advantage of being of a contained size, so that it is especially useful where the space available is restricted.

In known joints of the above-described type, the outer side, i.e. the side with a greater curve, is conformed such that, during full-speed operation, a part of the material transported by the air flow is deposited and remains therein. The rest of the material, drawn by the air, flows past the material which remains in the loop.

Document US-A-3 759 580, on which the preamble of claim 1 is based,discloses a joint with a concavity receiving a coanda nozzle.

Some limits and drawbacks are implicit in the prior art.

Firstly, a part of the material in powder or grain form which flows through the joint might lose its original characteristics (calibre, particle shape, surface state etc.). For example, some loose material particles, as they interact during movement, tend to compact. The particles might also degrade, especially if they are of a particularly fragile material, by effect of the collisions and dragging among the particles as they move. This impacting and dragging are mostly caused by the fact that the pneumatically drawn particles contact with the particles lodged in the loop of the joint.

A further drawback is due to the fact that the material which remains in the loop (and is liable to be there for a considerable time) might degrade or even be subject over time to biochemical contamination.

Secondly, in known joints there is the risk of progressive blockage due to collection of material in the joint.

Thirdly, known joints cause considerable loss of head in the pneumatic energy needed to carry out the material transportation efficiently.

The main aim of the present invention is to make available a joint which enables the drawbacks in the prior art to be overcome.

An advantage of the invention is that it provides a very small joint, especially useful for application to a pneumatic plant for loading silos and hoppers with grain or powder materials.

A further advantage of the invention is that the grain or powder passing through the joint undergoes no change in its characteristics, even when the material itself is of a highly-abrasive nature.

A further advantage of the invention is that it enables a high transportation speed to be reached, and also avoids material remaining in the joint.

A still further advantage is that much less pneumatic energy is lost during the passage of the material through the joint, resulting in an energy saving.

There are still more advantages: high resistance to wear in the joint crossed by the material; very good resistance to material packing, to mechanical and biochemical degradation, as well as to contamination of the material transported; maintenance of the special characteristics of the loose material; reduced danger of progressive blocking of the joint.

These aims and advantages and more besides are all attained by the invention, as it is characterised in the appended claims.

Further characteristics and advantages of the present invention will better emerge from the detailed description that follows, of a preferred but not exclusive embodiment thereof, illustrated purely by way of example in the accompanying figures of the drawings, in which:
figure 1 is a vertical-elevation schematic view of a pneumatic plant for loading silos with grain or powder materials;
figure 2 is a schematic section of a detail of figure 1 according to a vertical section plane;
figure 3 is a schematic section made according to line III-III of figure 2.

With reference to the figures of the drawings, 1 denotes in its entirety a plant for loading loose material, either granular or powder, into a container, using a pneumatic material transportation system. In this particular case the container is a silo 2.

The plant 1 comprises a container 3 from which the loose material is to be transferred to the silo 2. To achieve this the material has to be raised to the level of a filler mouth located at the upper part of the silo 2.

The container 3 is connected to the silo 2 through at least one pipeline 4 having at least a vertical tract 40 joined, by a joint 5 having a 90° bend in which the angle is achieved in a short tract, i.e. fairly sharply, to a short horizontal tract 41 which ends at the filler mouth of the silo 2.

The plant is provided with means, of known type and not illustrated, for enabling pneumatic transportation of material from the container 3 to the silo 2 through the pipeline 4. These means for enabling transportation are operated by creating a depression in the silo 2 or an overpressure in the container 3.

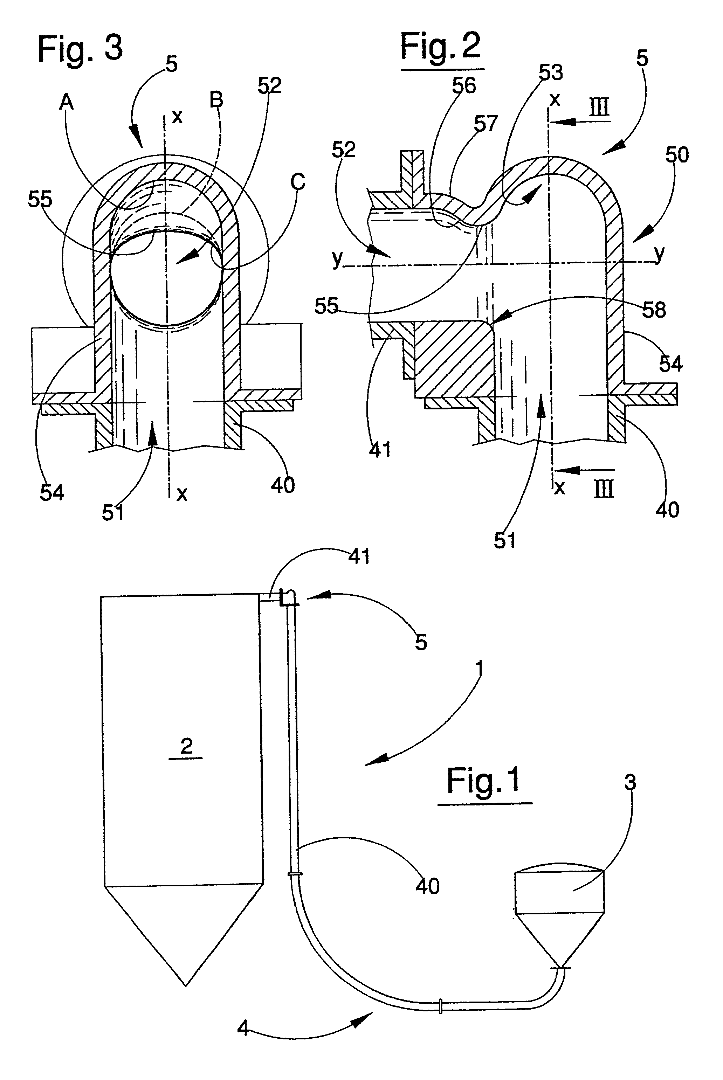

Figures 2 and 3 offer more detail on the right-angled joint 5 arranged along the pipeline 4. The joint 5 is destined to connect two concurrent-axis pipes lying at roughly 90° to each other.

The joint 5 comprises a hollow body 50 made in wear-resistant material, preferably a polyurethane elastomer.

The hollow body 50 internally defines a curved conduit, the bend being of about 90°. The conduit is provided with a mouth at either end, in effect an inlet mouth 51 and an outlet mouth 52, arranged at right-angles to each other.

Inside the conduit, at an upper part of the inlet part, following on from the inlet mouth 51, there is a concavity 53 having a depth which is linearly further from the inlet 51 than is any part of the outlet mouth 52. These distances are measured in a parallel direction to the axis x-x of the inlet mouth 51. In other words, with reference to figure 3, the upper edge A of the concavity 53 is located higher than the upper edge B (see figure 3) of the outlet mouth 52.

The concavity 53 is spherical and cap-shaped with a centre arranged in proximity of the axis x-x of the inlet mouth 51. The concavity 53 joins tangentially and continuously, with no convexity, bends, edges, projections or other interruptions to its continuity, with a cylindrical tract 54 of the conduit which is in turn joined to the inlet mouth 51.

In the upper part of the conduit, at a zone comprised between the concavity 53 and the outlet mouth 52, there is a rounded swell 55 joined with both the concavity 53 and the outlet mouth 52. The swell 55 projects inwardly of the conduit in a perpendicular direction to the axis y-y of the outlet mouth 52 and is conformed and disposed so that the axis y-y is closer to the edge C of the top of the swell 55 than it is to the edge B of the outlet mouth 52. Thanks to the presence of the swell 55, at least one passage section in the conduit which is normal to the axis y-y of the outlet mouth 52 is narrower than the outlet mouth 52 itself, as shown in figure 3. The upper edge C (represented by an unbroken line in figure 3) of at least one passage section which is normal to the axis y-y of the outlet mouth 52 is set lower than the upper edge B (represented by a broken line in figure 3) of the outlet mouth 52. Internally, the conduit exhibits an inclined surface 56 which, starting from the top of the swell 55 and, progressively as it approaches the outlet mouth 52, progressively distances from the axis y-y of the outlet mouth 52 up until it joins with a short cylindrical tract 57 of conduit which terminates in the outlet mouth 52.

The curved conduit exhibits an internal side 58 of the 90° bend which has a minimum of curvature. The swell 55 is arranged so that it is on a parallel directrix to the axis x-x of the inlet mouth 51 and passes close to the internal side of the bend 58.

The concavity 53, located on the external side of the bend and having a greater curvature, is joined to the inlet tract 54 of the conduit so that, with reference to figure 2, on the right wall of the conduit, i.e. the wall which is furthest from the outlet mouth 52, no recesses, niches or depressions are exhibited. Furthermore, the right wall of the conduit (still with reference to figure 2) presents no points or zones whose distance from the outlet mouth 52 is greater than the distance between the outlet mouth 52 itself and the point of the inlet mouth 51 which is furthest from the outlet mouth 52 (i.e. in figure 2 the rightmost point of the inlet mouth 51). The above-mentioned distances are all evaluated in a parallel direction to the axis y-y of the outlet mouth 52.

In use, the pneumatic transport plant is activated and generates a flow of air inside the transportation pipeline 4 which draws the granular or powder material. The material is then transferred from the container 3 to the silo 2, passing through the joint 5. The particles of the material enter the inlet mouth 51 and exit through the outlet mouth 52 without pausing while in the joint 5. The special shape of the internal conduit of the joint 5 prevents any packing of the grain or powder drawn by the air flow. Further, there is no lodging of the material in the joint 5; practically all of the material entering the joint 5 exits rapidly from it. Experiments have shown that there is a considerable reduction in risk of bio-degradation of the material. The absence of material remaining for any significant time inside the joint 5 also very considerably reduces the risk of progressive blockage therein. It has been observed that thanks to the special conformation of the internal conduit of the joint 5, the surfaces of the joint 5 itself wear much less quickly due to the passage of the grains or powder there-through.

## Claims

1. A joint for pipelines for pneumatic transportation of loose materials, destined to connect two pipes (40 and 41), having concurrent axes and forming a 90° bend, in which the joint (5) comprises a hollow body (50) which internally defines a curved conduit having a right-angled bend, the joint (5) exhibiting an inlet mouth (51) and an outlet mouth (52) for the loose materials, arranged at 90° each with respect to the other; wherein
internally of the conduit and facing the inlet mouth (51) is a concavity (53) having a depth such that at least one part thereof is of a distance from the inlet mouth (51) which is greater than a distance between the inlet mouth (51) and any one point of the outlet mouth (52), which distances are measured according to a parallel direction to the axis (x-x) of the inlet mouth (51);
chracaterised in that:
a rounded swell (55) is situated between the concavity (53) and the outlet mouth (52), which swell (55) is joined both to the concavity (55) and to the outlet mouth (52); the swell (55) projecting internally of the conduit in a perpendicular direction to an axis (y-y) of the outlet mouth (52) so that the axis (y-y) is closer to the top of the swell (55) than to the edge (B) of the outlet mouth (52).

2. The joint of claim 1, **characterised in that** the concavity (53) joins tangentially and continuously, with no convexities, bends, edges, projections or other interruptions, to a cylindrical tract (54) of the conduit which is immediate to the inlet mouth (51).

3. The joint of claim 1 or 2, **characterised in that** the concavity (53) is spherical and cap-shaped, having a centre which is arranged in proximity of the axis (x-x) of the inlet mouth (51).

4. The joint of any one of the preceding claims, **characterised in that** the curved conduit exhibits an internal side (58) of the 90° bend which has a minimum curvature and that the swell (55) and the internal side (58) are reciprocally arranged so as to be on a same directrix which is parallel to the axis (x-x) of the inlet mouth (51):

5. The joint of any one of the preceding claims, **characterised in that** the hollow body (50) is made of a polyurethane elastomer.

6. A pneumatic transportation plant for transferring grain or powder materials into a silo (2), comprising:
a pipeline (4) having at least one vertical tract (40) joined, by means of a joint (5), to a horizontal tract terminating in an upper part of the silo (2);
means for enabling pneumatic transfer of the materials towards the silo (2) through the pipeline (4);
**characterised in that** the joint (5) is made according to any one of the preceding claims.

## Patentansprüche

1. Kupplung für Rohrleitungen zur pneumatischen Förderung von Schüttgut, die dazu bestimmt ist, zwei Rohre (40 und 41) miteinander zu verbinden, die konvergierende Achsen besitzen und eine 90°-Krümmung bilden, wobei die Kupplung (5) einen Hohlkörper (50) beinhaltet, der im Inneren eine gekrümmte Leitung mit rechtwinkliger Krümmung begrenzt; die Kupplung (5) beinhaltet eine Einmündung (51) sowie eine Ausmündung (52) für das Schüttgut, die im 90°-Winkel zueinander angeordnet sind, wobei
im Inneren der Leitung und gegenüber der Einmündung (51) eine Höhlung (53) mit einer derartigen Tiefe eingerichtet ist, dass mindestens einer ihrer Teile sich in einem Abstand zur Einmündung (51) befindet, der größer ist, als der Abstand zwischen der Einmündung (51) und einem beliebigen Punkt der Ausmündung (52), wobei diese Abstände in einer Richtung gemessen werden, die parallel zur Achse (x-x) der Einmündung (51) verläuft;
**dadurch gekennzeichnet, dass** zwischen der Höhlung (53) und der Ausmündung (52) eine gerundete Auswölbung (55) eingerichtet ist, die sowohl mit der Höhlung (55), als auch mit der Ausmündung (52) verbunden ist; die Auswölbung (55) ragt im Inneren der Leitung in senkrechter Richtung zur Achse (y-y) der Ausmündung (52) vor, sodass die Achse (y-y) näher an der Spitze der Auswölbung (55) liegt, als am Rand (B) der Ausmündung (52).

2. Kupplung nach Anspruch 1 **dadurch gekennzeichnet, dass** die Höhlung (53) tangential und stufenlos, ohne Wölbungen, Krümmungen, Kanten, Vorsprünge oder andere Unterbrechungen, an einen zylindrischen Abschnitt (54) der Leitung anschließt, der sich unmittelbar an der Einmündung (51) befindet.

3. Kupplung nach Anspruch 1 oder Anspruch 2 **dadurch gekennzeichnet, dass** die Höhlung (53) die Form einer kugelförmigen Kappe besitzt und ihr Mittelpunkt in Nähe der Achse (x-x) der Einmündung (51) liegt.

4. Kupplung nach einem der voranstehenden Ansprüche
**dadurch gekennzeichnet, dass** die gekrümmte Leitung eine Innenseite (58) der 90°-Krümmung mit minimaler Krümmung aufweist und dass die Vorwölbung (55) und die Innenseite (58) jeweils auf einer Leitlinie angeordnet sind, die parallel zur Achse (x-x) der Einmündung (51) verläuft.

5. Kupplung nach einem der voranstehenden Ansprüche
**dadurch gekennzeichnet, dass** der Hohlraum (50) aus Polyurethan-Elastomer besteht.

6. Pneumatische Förderanlage für die Beförderung von Stoffen in Pulver- oder Granulatform in ein Silo (2) , umfassend:
eine Rohrleitung (4) mit mindestens einem senkrechten Abschnitt (40), durch eine Kupplung (5) verbunden mit einem waagrechten Abschnitt, der im oberen Teil des Silos (2) endet;
Mittel, die die pneumatische Beförderung der Stoffe durch die Rohrleitung (4) zum Silo ermöglichen;
**dadurch gekennzeichnet, dass** die Kupplung (5) gemäß einem der vorhergehenden Ansprüche ausgeführt ist.

## Revendications

1. Raccord pour canalisations, destinées au transport pneumatique de matériaux en vrac, servant à raccorder entre eux deux tuyaux (40 et 41) présentant des axes concourants et formant un angle de 90 degrés, dans lequel le raccord (5) comprend un corps creux (50) qui définit de manière interne un conduit recourbé présentant une courbe à angle droit, le raccord (5) étant doté d'un orifice d'entrée (51) et d'un orifice de sortie (52) pour le matériau en vrac, disposés selon un angle de 90° l'un par rapport à l'autre ; dans lequel, faisant face à l'orifice d'entrée (51), se trouve une concavité (53), présentant une profondeur telle qu'au moins une partie de celle-ci se trouve à une distance par rapport à l'orifice d'entrée (51) qui est supérieure à la distance séparant l'orifice d'entrée (51) de n'importe quel point de l'orifice de sortie (52) ; les distances étant évaluées selon une direction parallèle à l'axe (x - x) de l'orifice d'entrée (51);
**caractérisé en ce qu'**un renflement arrondi (55) est situé entre ladite concavité (53) et l'orifice de sortie (52), ledit renflement (55) étant raccordé aussi bien à la concavité (55) qu'à l'orifice de sortie (52) ; le renflement (55) se prolonge dans la partie interne du conduit, dans une direction perpendiculaire à un axe (y-y) de l'orifice de sortie (52), de telle manière que ledit axe (y-y) se trouve plus près du sommet du renflement (55) que du bord (B) de l'orifice de sortie (52).

2. Raccord selon la revendication 1, **caractérisé en ce que** ladite concavité (53) se raccorde de manière tangentielle et continue, sans convexité, flexion, angle, saillie ou autre solution de continuité, avec un tronçon cylindrique (54) du conduit qui se trouve à proximité de l'orifice d'entrée (51).

3. Raccord selon la revendication 1 ou 2, **caractérisé en ce que** la ladite concavité (53) présente la forme d'une calotte sphérique dont le centre se trouve à proximité de l'axe (x-x) de l'orifice d'entrée (51).

4. Raccord selon l'une quelconque des revendications précédentes, **caractérisé en ce que** ledit conduit présente un côté interne (58) de l'angle à 90° qui a un rayon de courbure minimum et par le fait que le renflement (55) et le côté interne (58) sont disposés réciproquement de manière à se trouver sur une même directrice, qui est parallèle à l'axe (x - x) de l'orifice d'entrée (51).

5. Raccord selon l'une quelconque des revendications précédentes, **caractérisé en ce que** ledit corps creux (50) est constitué d'un élastomère au polyuréthanne.

6. Installation de transport pneumatique pour introduire des matériaux granulés ou en poudre dans un conteneur (2), comprenant :
une canalisation (4) présentant au moins un tronçon vertical (40) qui est relié, par le biais d'un raccord (5) à un tronçon horizontal qui débouche dans une partie supérieure du conteneur (2)
moyens permettant le transfert pneumatique des matériaux vers le conteneur (2) à travers la canalisation de transport (4) ;
**caractérisé en ce que** ledit raccord (5) est réalisé conformément à une quelconque des revendications précédentes.
